# EUROPEAN PATENT SPECIFICATION

(11) **EP 2 297 245 B1**
(45) Date of publication and mention of the grant of the patent: **15.01.2014**
(21) Application number: 09772538.6
(22) Date of filing: 03.07.2009
(51) Int. Cl.: C08L 67/02

(54) **POLYESTER THIN WALLED ELECTRONIC AND ELECTRICAL COMPONENTS**
ELEKTRONISCHE UND ELEKTRISCHE KOMPONENTEN MIT EINER DÜNNEN POLYESTERWAND
COMPOSANTS ÉLECTRONIQUES ET ÉLECTRIQUES À PAROIS MINCES EN POLYESTER

(30) Priority: 04.07.2008 EP 08012092
(43) Date of publication of application: 23.03.2011
(73) Proprietor: DSM IP Assets B.V., 6411 TE Heerlen (NL)
(72) Inventor: LEEMANS, Luc Elza Florent, B-3720 Kortessem (BE); SCHELLEKENS, Ronald Michaël Alexander, NL-6241 DN Bunde (NL)
(74) Representative: Dorrestijn, Antoon
(86) International application number: PCT/EP2009/058415
(87) International publication number: WO 2010/000838

(56) References cited:
- EP-A- 0 539 325
- EP-A- 1 614 716
- WO-A-03/020826
- WO-A-2004/003071
- US-B1- 6 235 831

## Description

This invention relates to thin walled electronic and electrical components comprising a flame retardant polyester composition.

Thin walled electronic and electrical components, such as sign and power relays, including the bobbins and housings thereof, are required to have excellent mechanical, electrical and flame retardant properties. The trend towards the further miniaturisation of electronic and electrical components has resulted in increasing difficulties in producing thin walled components of less than 1.0 mm thickness, which are still able to satisfy the stringent mechanical, electrical, and flame retardant criteria demanded.

US 6,235,832 addressed this problem by providing a glass reinforced PBT composition, which incorporated a brominated polystyrene flame retardant. Thin wall components satisfied UL-94 V0 requirements for wall thickness of 1.6 mm and 0.8 mm. In addition, an improvement in the Comparative Tracking Index (CTI) was also noted. Despite these improvements, there is a continuing need to produce even thinner walled components which satisfy UL-94 V0 requirements and have even further improved electrical properties, as defined by the CTI. Critical to the success of satisfying these needs, is the requirement of the polymeric composition to have sufficient flow properties to reliability flow into thin walled injection moulding die cavities.

Accordingly, the object of the present invention is to provide thin wall electronic and electrical components having improved CTI, while achieving stringent UL-94 V0 flame retardant requirements at wall thicknesses of less than 1.0 mm.

This objective is achieved by a thin walled electronic or electric component comprising polymeric composition comprising, relative to the total weight of the polymeric composition:
(A) 30-70 wt% of a polyester composition; comprising at least 50 wt. % of polybutylene terephthalate (PBT), the remaining portion being made up by one more polymers selected from the group consisting of of polyethyleneglycol terephthalate (PET), PET copolymers, polybutylene naphthanate (PBN), PBN-copolymers, polytrimethylene terephthalate (PTT), PTT-copolymers, polyethyleneglycolnaphthanate (PEN), PEN-copolymers, polycyclohexanedimethylene terephthalate (PCT), PCT-copolymers, aromatic polycarbonates and aromatic polyester carbonates,
(B) 10-55 wt% of a reinforcing agent;
(C) 8-20 wt% of an anionic brominated polystyrene;
(D) 2-10 wt% of a synergist; and
(E) 0.1-2.5 wt% of an anti-dripping agent.
(F) 0-5 wt% of one or more further additives.

The thickness of the thin wall being no more than 0.6 mm.

It is surprising that a composition including an anti dripping agent which, due to its networking enhancing nature, is known to contribute to poor injection moulding flow properties, was able to be successfully incorporated into a thin walled electronic component. It was further unexpected that the composition of the present invention also resulted in an improved CTI.

In WO 03/020826 a polymeric composition containing brominated flame retardants is described. The composition contains however high levels of impact modifiers and it is not evident that the good results of the present invention with respect to flow properties and especially CTI can be obtained with the specific composition of the present application, containing a specific anionic brominated polystyrene. Furthermore WO03/020826 gives no teaching about the use at low wall thickness.

Preferably, the thin walled component of the present invention has a thickness of no more than 0.4 mm.

The composition of the present invention was also found to have good mechanical properties, including dimensional stability and low out-gassing performance. Thus, the thin wall components are particularly suited to applications such as relays, bobbins and electronic and electrical housings, especially enclosed housings.

### Flame retardant

The flame retardant component of the polymeric composition includes parts (C), (D) and (E). The total flame retardant content, relative to the total weight of the thin walled component is preferably in the range 10-25 wt% and more preferably 12 to 20 wt%. With the lower limit dictated by the requirement to achieve UL-94 V0 requirements, while the upper limit being dictated by considerations regarding flow, mechanical and electrical properties. To enable sufficient flow and good electrical properties (i.e CTI) in thin walled components, the total flame retardant content is no more than 17 wt.% and more preferably no more than 15 wt.% relative to the total weight of the thin walled component.

In a preferred embodiment, the molar ratio between the bromine content of (C) and a metal component of (D) (eg. antimony) is between 1 and 5, preferably between 2 and 4. At low bromine contents (i.e. below 6.5 wt%) an increased proportion of synergist may be required to achieve flame retardant criteria resulting in a preferred molar ratio of the bromine to the synergist metal of between 1.5 to 2.5.

### (C) Anionic brominated polystyrene

Component (C) comprises brominated anionic styrenic polymer at a content in the range of 8 to 20 weight %, and preferably 10 to 15 weight %, relative to the total weight of the of the polymeric composition. Component (C) is (i) at least one anionically-produced styrenic homopolymer that has been brominated or (ii) at least one anionically-produced copolymer of two or more styrenic monomers that has been brominated, or (iii) both of (i) and (ii). The bromine content of such polymer should be at least about 50 percent by weight. Preferred brominated anionic styrenic polymers, especially brominated anionic polystyrene, have a bromine content of at least about 60 wt. %, and more preferred brominated anionic styrenic polymers, especially brominated anionic polystyrene, have a bromine content of at least about 64 wt. %. Particularly preferred brominated anionic styrenic polymers, especially brominated anionic polystyrene, have a bromine content in the range of about 67 to about 69 wt. %. The bromine content of brominated styrenic polymers such as brominated polystyrene will seldom exceed about 71 wt. %. Typically the brominated anionic styrenic polymer will have a melt flow index by the ASTM D1238-99 test procedure, conducted at 220°C. and 2.16 kg, in the range of about 3 to about 40, and preferably such melt flow index is in the range of about 5 to about 35. Most preferred brominated anionic styrenic polymers used in the practice of this invention have a melt flow index under these test conditions in the range of about 6 to about 30.
Anionic styrenic polymers which are brominated to form the brominated anionic styrenic polymers used pursuant to this invention are one or more anionic homopolymers and/or anionic copolymers of at least one vinyl aromatic monomer. Preferred vinyl aromatic monomers have the formula:

H₂C=CR-Ar

wherein R is a hydrogen atom or an alkyl group having from 1 to 4 carbon atoms and Ar is an aromatic group (including alkyl-ring substituted aromatic groups) of from 6 to 10 carbon atoms.

Examples of such monomers are styrene, alpha-methylstyrene, ortho-methylstyrene, meta-methylstyrene, para-methylstyrene, para-ethylstyrene, isopropenyltoluene, vinylnaphthalene, isopropenylnaphthalene, vinylbiphenyl, vinylanthracene, the dimethylstyrenes, and tert-butylstyrene. Polystyrene is the preferred reactant. When the brominated styrenic polymer is made by bromination of an anionic copolymer of two or more vinyl aromatic monomers, it is preferred that styrene be one of the monomers and that styrene comprise at least 50 weight percent and preferably at least about 80 weight percent of the copolymerizable vinyl aromatic monomers. It is to be noted that the terms "brominated anionic styrenic polymer" and "brominated anionic polystyrene" as used herein refer to a brominated anionic polymer produced by bromination of a pre-existing anionic styrenic polymer such as anionic polystyrene or an anionic copolymer of styrene and at least one other vinyl aromatic monomer, as distinguished from an oligomer or polymer produced by oligomerization or polymerization of one or more brominated styrenic monomers, the properties of the latter oligomers or polymers being considerably different from brominated anionic polystyrene in a number of respects. Also, the terms "vinylaromatic" and "styrenic" in connection with monomer(s) or polymer(s) are used interchangeably herein.
The aromatic pendant constituents of the anionic styrenic polymer can be alkyl substituted or substituted by bromine or chlorine atoms, but in most cases, will not be so substituted. Typically, the anionic styrenic polymers used to produce the brominated anionic styrenic polymers used in the practice of this invention will have a weight average molecular weight (Mw) in the range of about 1500 to about 50,000 and a polydispersity in the range of 1 to about 5. Preferred brominated anionic styrenic polymers used in the practice of this invention are produced from anionic styrenic polymers having a weight average molecular weight (Mw) in the range of about 1800 to about 10,000 and a polydispersity in the range of 1.0 to about 3.0, and most preferably these ranges are, respectively, about 2000 to about 5000 and 1.0 to about 1.5.

The Mw of the brominated anionic styrenic polymer is preferably in the range 2000 to 20,000 and more preferably 3000 to 5000, when calibrated against polystyrene standards. The polydisperisity of the brominated anionic styrenic is preferably in the range of 1.0 to about 3.0 and more preferably in the range of 1.0 to about 1.5.

The Mw and polydispersity values are both based on size exclusion chromatography (SEC) techniques.

Methods for the preparation of anionic styrenic polymers such as anionic polystyrene are known in the art and reported in the literature. See for example, U.S. Pat. Nos. 3,812,088; 4,200,713; 4,442,273; 4,883,846; 5,391,655; 5,717,040; and 5,902,865. Preferably, the anionic polymers are produced according to the process described in US Pat. No. 6,657,028.
Bromination processes which can be used for producing a brominated anionic styrenic polymer are disclosed in U.S. Pat. Nos. 5,677,390; 5,686,538; 5,767,203; 5,852,131; 5,916,978; and 6,207,765.
Brominated anionic polystyrene is available in the marketplace from Albemarle Corporation under the designation SAYTEX® HP 3010 or SAYTEX® PBT-620.

### (D) Synergist

A flame retardant aid or synergist has been found to be essential to achieve the stringent performance criteria that flame retardant thin walled electronic components demand. The synergist content is in the range 2-10 wt% synergist and preferably in the range 2.5 to 6.0 and more preferably more preferably in the range of 3.0 to 5.5 wt.% relative to the total weight of the polymeric composition. Preferably the synergist comprises one or more antimony oxides such as antimony pentoxide, and most especially antimony trioxide (Sb₂O₃). Alkali metal antimonates such as sodium antimonate can also be used either together with or in place of an antimony oxide. In lieu of or in addition to one or more antimony oxides and/or one or more alkali metal antimonates, use can be made of other flame retardant aids or synergists. Among such other suitable materials that can be used for this purpose include one or more zinc borates (including mixed oxides of boron and zinc), calcium borate (including mixed oxides of boron and calcium), barium sulfate, zinc stannate and similar known flame retardant aids or synergists.

### (E) Anti-dripping agent

Preferably, the anti-dripping agent is poly(tetrafluoroethylene) or a compound including thereof, although other dripping agents, such as maleated styrene-hydrogenated butadiene-styrene(SEBS), are also suitable. The anti-dripping agent content, relative to the total weight of the polymeric composition, is preferable at least 0.1 wt% and more preferably at least 0.3 wt% and even more preferably at least 0.5 wt.%. It has been found these quantities of anti-dripping agent are required, in combination with the other components of the present invention, to achieve the required flame retardant properties. An anti-dripping agent content below 2 wt%, relative to the total weight of the polymeric composition, is preferred to ensure that the flow properties are sufficient to produce thin walls components below 1.0 mm, preferably below 0.8 and more preferably 0.6 mm or less. More preferably, the anti-dripping agent content is below 1.5 wt% and even more preferably no more than 1.0 wt.%.

### (A) Polyester composition

The polyester composition contains at least 50 wt.% polybutylene terephthalate relative to the total weight of the polyester composition. Preferably, the polyester composition comprises at least 60 wt.%, even more preferably at least 80 wt.% and most preferably at least 90 wt.% polybutylene terephthalate relative to the total weight of the polyester composition. The remaining portion of the polyester composition is made up of one or more polymers selected from the group consisting of polyethyleneglycol terephthalate (PET), PET copolymers, polybutylene naphthanate (PBN), PBN-copolymers, polytrimethylene terephthalate (PTT), PTT-copolymers, polyethyleneglycolnaphthanate (PEN), PEN-copolymers, polycyclohexanedimethylene terephthalate (PCT), PCT-copolymers, aromatic polycarbonates and aromatic polyester carbonates.

The addition of the one or more further polymers to the polyester composition may be used to enhance flame retardant properties or improve the ease of de-moulding.

In a preferred embodiment, the polyester composition consists of polybutylene terephthalate. Polybutylene terephthalate is understood in the context of the present invention to be the condensation product of butanediol and terephthalic acid, obtainable by direct esterification, or of butanediol and the dimethyl ester of terephthalic acid, obtainable by transesterification, thus comprising the esterified residues of butanediol and terephthalic acid. The PBT may optionally be a copolymer comprising other components next to the esterified residues of butanediol and terephtalic acid, such as the esterified residues of other diols and dicarboxylic acids, as well as small amounts of polyfunctional alcohols or carboxylic acids. The PBT in the composition according to the invention typically contains at least 70 wt. % of esterified residues of butanediol and terephthalic acid, relative to the weight of the PBT.

Suitable diols that may be comprised in the PBT, are, for example, ethylene glycol, diethylene glycol, propylene glycol, 2, 3-pentanediol, neopentylglycol, hexamethylene glycol, and cyclohexanedimethanol.

Suitable dicarboxylic aicds are, for example, ortho-phthalic acid, isophthalic acid, naphthalene dicarboxylic acid, adipic acid, sebacic acid, and succinic acid.

Suitable polyfunctional carboxylic acids that can be used here are, for example, trifunctional carboxylic acids (such as trimesic acid and trimellitic acid) and tetrafunctional carboxylic acids (such as pyromellitic acid).

Suitable polyfunctional alcohols are, for example, triols (such as glycerol, trimethylol ethane, and trimethylol propane), and tetrols (such as pentaerythritol).

Generally, the PBT comprises the other components in an amount of less than 5 wt. %, preferably less than 1 wt. %, even more preferably less than 0.5 wt. %, relative to the weight of the PBT and most preferably no other components at all. A lower amount of other components is preferred in order to better maintain the fast crystallization speed and/or the high heat dimensional stability properties of PBT.

The relative viscosity (ηᵣₑₗ) of the polyester composition, measured in m-cresol at 25°C (1 part by weight polyester composition dissolved in 100 parts by weight m-cresol), is preferably in the range 1.75 to 2.10 and more preferably in the range 1.8 to 1.90. A ηᵣₑₗ below 1.90 is preferred to provide the component composition with sufficient flow properties to form the thin walled components.

### (B) Reinforcing agents

To achieve the required mechanical properties demanded of thin walled electronic and electrical components, the polymeric composition comprises 10 to 55 wt.% relative to the total weight of the polymeric composition. The reinforcing agent includes mineral fillers and reinforcing fibers. Preferably, the reinforcing agent comprises, and even more preferably consists of, reinforcing fibres. The reinforcing fibres are preferably suitable glass fibres, which generally have a fibre diameter of from 5 to 20 µm, preferably 8-15 µm, and most preferably 9-13 µm for optimal balance of mechanical properties, like stiffness, strength and toughness, and processability. The glass fibres have a sizing on their surface that is compatible with thermoplastic polyesters and generally contains an epoxy- or amino-functional compound. Preferably the sizing contains an epoxy-functional compound. The advantage thereof is a good dispersability in PBT and improved long-term mechanical properties of the polyethylene terephthalate composition, especially improved fatigue behaviour.

Suitable mineral fillers include metal sulfates, micas, clays such as alumino silicates and alumino magnesium silicate, talcs, glass flake, wollastonite, metal oxides such as titanium dioxide, zinc sulfide, ground quartz. Preferred mineral fillers are the talc, clays and metal sulfates. Typical silicates include calcium silicates such as wollastonite; aluminum silicates such as kaolin which is a clay material composed of fine-grained mineral kaolinite; hydrated magnesium silicates known as Talc; silica and alumina type mineral materials, and mica which is a hydrous aluminosilicate material. Clay is a hydrated aluminum silicate generalized by the formula: Al₂O₃-SiO₂.xH₂O. Talc is a preferred mineral filler.

The polymeric composition preferably contains 20-40 wt% of reinforcing agent, more preferably 25-35 wt% of reinforcing agent, and even more preferably 28-32 wt % reinforcing agent. The advantage hereof is a more balanced compromise between high strength and stiffness, a low relative density and easy processing behaviour of the polyester composition.

### (F) Further additives

Further additives may be included in the polymeric composition. While their content will be typically dictated by the functionality required and manufacturer's recommendations, the composition contains no more than 5 wt% relative to the total weight of the polymeric composition of one or more further additives. Preferably the composition contains less than 4 wt% of further additives, more preferably less than 3 wt%, even more preferably less than 2 wt%. Additives may include anti-oxidants, metal deactivators, UV stabilisers, pigments, dyes, processing aids, acid scavengers, thermal stabilisers, lubricants, nucleating agents and other related materials.

In a preferred embodiment of the present invention:
(A) consists of polybutylene terephthalate;
(B) comprises glass fibres;
(D) comprises antimony trioxide; and
(E) comprises PTFE.

The above compositional limitation results in a thin walled electronic or electrical component with a good balance of mechanical, flow and electrical properties.

### Examples

### Materials

PBT: ex-DSM, ηᵣₑₗ = 1.85, measured in m-cresol at 25°C (1 part by weight polyester composition dissolved in 100 parts by weight m-cresol);
Glass Fibers: ex-Owens Corning, product code: OC 183-11 P (11µm diameter);
Anionic Brominated polystyrene: from SAYTEX® PBT-620, containing 20 wt.% PBT (ex-Albemarle);
Brominated polystyrene: from SAYTEX® HP-7010 (ex-Albemarle); PFTE: ex-3M, product code: Dyneon PA5934;
Antimony trioxide: (Sb₂O₃) ex-Sica, product code: AOL PBT 80/20, containing 20 wt.% PBT; and Mould Release Agent: ex-Lonza, product code: Glycolub P (PETS).

### Sample preparation

The compounding of examples E1 and E2 and comparative experiments CE-A, CE-B and CE-C were performed on a Werner & Pfleiderer KSK 4042D extruder set at 250-270°C with a screw speed of 400 rpm. All components were dosed into the feed port of the extruder, except for the glass fibers which were dosed separately into the melt via a side feed port.

The resultant granules were dried to a moisture content of below 0.02% and fed into an Engel 45B injection moulder with a barrel temperature setting of 230-255°C and a mould temperature of 90°C. The injection moulder filled mould cavities corresponding to the 0.4 mm and 0.8 mm thin wall components used for flame retardant testing in addition to the test plate used to determine the CTI.

### Test method

Flame retardancy was determined in accordance to the rating system under UL-94, in which the 0.4 mm and 0.8 mm were preconditioned at either 23°C at 50% relative humidity for 48hrs or for 168 hrs at 70°C.

Comparative tracking Index (CTI) was determined in accordance with IEC 112 using a plate with dimensions 80 mm x 80mm x 30mm.

### Results

As illustrated in Table 1, the compositions under the scope of the present invention have improved CTI while satisfying an UL-94 flame retardancy rating of V0 down to a wall thickness of 0.4 mm. By comparing E1 and CE-C the positive effect of the anionic brominated polystyrene becomes clear, especially with respect to the CTI.

**Table 1 Formulation, Flammability and Electrical Data (% wt.)**

| Formulation | E-1 | E-2 | CE-A | CE-B | CE-C |
|---|---|---|---|---|---|
| PBT | 53.45 | 55.45 | 49.05 | 52.9 | 53.25 |
| Glass fibers | 30 | 30 | 30 | 30 | 30 |
| Sb₂O₃ | 3.7 | 4.3 | 6.1 | 5.0 | 3.7 |
| Anionic brominated polystyrene | 11.6 | 9.0 | 14.6 | | |
| Brominated polystyrene | | | | 12.1 | 11.8 |
| % Bromine | 8.0 | 6.2 | 10.0 | 8.2 | 8.0 |
| PTFE | 1.0 | 1.0 | | | 1.0 |
| Mould Release Agent | 0.25 | 0.25 | 0.25 | | 0.25 |
| Performance | | | | | |
| UL-94 @ 0.8 mm | V0 / V0 | V0 / V0 | V0 / V0 | V0 / V0 | V0 / V0 |
| 48hr / 168 hr | | | | | |
| UL-94 @ 0.4 mm | V0 / V0 | V0 / V0 | V2 / V2 | V2 / V2 | V1 / V0 |
| 48hr / 168 hr | | | | | |
| CTI | 325 | 350 | 275 | 275 | 250 |

## Claims

1. A thin walled electronic or electrical component comprising a polymeric composition consisting of, relative to the total weight of the polymeric composition:
(A) 30-70 wt% of a polyester composition comprising at least 50 wt. % of polybutylene terephthalate (PBT), the remaining portion being made up by one more polymers selected from the group consisting of of polyethyleneglycol terephthalate (PET), PET copolymers, polybutylene naphthanate (PBN), PBN-copolymers, polytrimethylene terephthalate (PTT), PTT-copolymers, polyethyleneglycolnaphthanate (PEN), PEN-copolymers, polycyclohexanedimethylene terephthalate (PCT), PCT-copolymers, aromatic polycarbonates and aromatic polyester carbonates,
(B) 10-55 wt% of a reinforcing agent;
(C) 8-20 wt% of an anionic brominated polystyrene;
(D) 2-10 wt% of a synergist; and
(E) 0.1-2.5 wt% of an anti-dripping agent.
(F) 0-5 wt% of one or more further additives,
**characterized in that** the thickness of the thin wall is no more than 0.6 mm.

2. The component of claim 1, wherein the polyester composition comprises at least 60 wt.% polybutylene terephthalate relative to the total weight of the polyester composition.

3. The component according to anyone of the preceding claims, wherein the anti-dripping agent is poly(tetrafluoroethylene) (PTFE).

4. The component according to anyone of the preceding claims, wherein the synergist is antimony trioxide.

5. The component according to anyone of the preceding claims, wherein the relative viscosity of the polyester composition, measured in m-cresol at 25°C (1 part by weight polyester composition dissolved in 100 parts by weight m-cresol), is in the range 1.75 to 2.1.

6. The component according to anyone of the preceding claims, wherein the anionic brominated polystyrene has a weight average molecular weight in the range 2,000 to 20,000 and a polydispersity in the range 1.0 to 3.0.

7. The component according to claim 6, wherein the thickness of the thin wall is no more than 0.4 mm.

## Patentansprüche

1. Dünnwandiges elektronisches oder elektrisches Bauteil, umfassend eine Polymerzusammensetzung, bestehend aus, bezogen auf das Gesamtgewicht der Polymerzusammensetzung:
(A) 30-70 Gew.-% einer Polyesterzusammensetzung, umfassend mindestens 50 Gew.-% Polybutylenterephthalat (PBT), wobei der restliche Teil aus einem oder mehreren Polymeren aus der Gruppe bestehend aus Polyethylenglykolterephthalat (PET), PET-Copolymeren, Poly-butylennaphthanat (PBN), PBN-Copolymeren, Polytrimethylenterephthalat (PTT), PTT-Copolymeren, Polyethylenglykolnaphthanat (PEN), PEN-Copolymeren, Polycyclohexandimethylenterephthalat (PCT), PCT-Copolymeren, aromatischen Polycarbonaten und aromatischen Polyestercarbonaten besteht,
(B) 10-55 Gew.-% eines Verstärkungsmittels;
(C) 8-20 Gew.-% eines anionischen bromierten Polystyrols;
(D) 2-10 Gew.-% eines Synergisten und
(E) 0,1-2,5 Gew.-% eines Antitropfmittels,
(F) 0-5 Gew.-% eines oder mehrerer weiterer Additive,
**dadurch gekennzeichnet, dass** die Dicke der dünnen Wand höchstens 0,6 mm beträgt.

2. Bauteil nach Anspruch 1, wobei die Polyesterzusammensetzung mindestens 60 Gew.-% Polybutylenterephthalat, bezogen auf das Gesamtgewicht der Polyesterzusammensetzung, umfasst.

3. Bauteil nach einem der vorhergehenden Ansprüche, wobei es sich bei dem Antitropfmittel um Poly-(tetrafluorethylen) (PTFE) handelt.

4. Bauteil nach einem der vorhergehenden Ansprüche, wobei es sich bei dem Synergisten um Antimontrioxid handelt.

5. Bauteil nach einem der vorhergehenden Ansprüche, wobei die relative Viskosität der Polyesterzusammensetzung, gemessen in m-Kresol bei 25°C (1 Gewichtsteil Polyesterzusammensetzung in 100 Gewichtsteilen m-Kresol gelöst), im Bereich von 1,75 bis 2,1 liegt.

6. Bauteil nach einem der vorhergehenden Ansprüche, wobei das anionische bromierte Polystyrol ein gewichtsmittleres Molekulargewicht im Bereich von 2000 bis 20.000 und eine Polydispersität im Bereich von 1,0 bis 3,0 aufweist.

7. Bauteil nach Anspruch 6, wobei die Dicke der dünnen Wand höchstens 0,4 mm beträgt.

## Revendications

1. Composant électronique ou électrique à paroi mince comprenant une composition polymère constituée, par rapport au poids total de la composition polymère, de :
(A) 30-70 % en poids d'une composition de polyester comprenant au moins 50 % en poids de téréphtalate de polybutylène (PBT), la partie restante étant constituée d'un ou plusieurs polymères choisis dans le groupe constitué par le téréphtalate de polyéthylène glycol (PET), les copolymères de PET, le naphtanate de polybutylène (PBN), les copolymères de PBN, le téréphtalate de polytriméthylène (PTT), les copolymères de PTT, le naphtanate de polyéthylène glycol (PEN), les copolymères de PEN, le téréphtalate de polycyclohexane-diméthylène (PCT), les copolymères de PCT, les polycarbonates aromatiques et les carbonates de polyester aromatiques ;
(B) 10-55 % en poids d'un agent de renforcement ;
(C) 8-20 % en poids d'un polystyrène anionique bromé ;
(D) 2-10 % en poids d'un synergiste ;
(E) 0,1-2,5 % en poids d'un agent anti-égouttement ; et
(F) 0-5 % en poids d'un ou plusieurs autres additifs,
**caractérisé en ce que** l'épaisseur de la paroi mince est inférieure ou égale à 0,6 mm.

2. Composant selon la revendication 1, dans lequel la composition de polyester comprend au moins 60 % en poids de téréphtalate de polybutylène par rapport au poids total de la composition de polyester.

3. Composant selon l'une quelconque des revendications précédentes, dans lequel l'agent anti-égouttement est le poly(tétrafluoroéthylène) (PTFE).

4. Composant selon l'une quelconque des revendications précédentes, dans lequel le synergiste est le trioxyde d'antimoine.

5. Composant selon l'une quelconque des revendications précédentes, dans lequel la viscosité relative de la composition de polyester, mesurée dans le m-crésol à 25 °C (1 partie en poids de composition de polyester dissoute dans 100 parties en poids de m-crésol), se situe dans la gamme de 1,75 à 2,1.

6. Composant selon l'une quelconque des revendications précédentes, dans lequel le polystyrène anionique bromé a un poids moléculaire moyen en poids dans la gamme de 2000 à 20 000 et une polydispersité dans la gamme de 1,0 à 3,0.

7. Composant selon la revendication 6, dans lequel l'épaisseur de la paroi mince est inférieure ou égale à 0,4 mm.
